# EUROPEAN PATENT SPECIFICATION

(11) **EP 0 605 449 B1**
(45) Date of publication and mention of the grant of the patent: **10.05.1995**
(21) Application number: 92918109.7
(22) Date of filing: 28.08.1992
(51) Int. Cl.: B01D 19/04

(54) **DEFOAMER COMPOSITION**
Entschäumungsmittel
COMPOSITION ANTIMOUSSANTE

(30) Priority: 28.09.1991 GB 9118410; 05.11.1991 GB 9123420
(43) Date of publication of application: 13.07.1994
(73) Proprietor: DORSET INDUSTRIAL CHEMICALS LTD., Chateauguay, Quebec J6J 4Z2 (CA)
(72) Inventor: FLAHERTY, Edwin, H., Pointe Claire, Quebec H9S 5N3 (CA); RAO, Mohan, A., Brossard, Quebec J4X 2H9 (CA)
(74) Representative: Silverman, Warren
(86) International application number: CA9200375
(87) International publication number: WO9304758

(56) References cited:
- DE-B- 2 148 638
- DE-C- 855 688
- US-A- 3 180 786
- US-A- 3 935 121

## Description

### FIELD OF INVENTION

This invention relates to a defoamer composition for use in pulp washing.

### BACKGROUND TO THE INVENTION

In the formation of wood pulp from which paper is made, one commonly-employed procedure involves chemical treatment of wood chips to dissolve lignin and free the cellulosic fibres from the wood chips in a digestion operation, such as by Kraft process. The resulting slurry of wood fibres in spent digestion chemicals, or black liquor, then is passed to a brown stock washing operation wherein the pulp is washed to remove the black liquor, which contains a variety of sodium salts and lignin. The washed pulp then usually is passed to a bleach plant wherein the pulp is bleached and further purified to provide the desired product.

Foaming occurs during such washing and it is conventional to add a defoamer composition to the pulp during such washing. Such composition may be a composition as described in our Canadian Patent No. 1,069,742, the disclosure of which is incorporated herein by reference, comprising a suspension of finely-divided hydrophobic lubricating particles in a suitable carrier liquid.

The defoamer composition also may be aqueous based, as described, for example, in our copending Canadian Patent application Serial No. 2,048,823 filed August 8, 1991, the disclosure of which is incorporated herein by reference.

### SUMMARY OF INVENTION

In accordance with the present invention, there is provided an improved defoamer composition which comprises at least one water-soluble cationically-charged species as a component of the composition. The presence of the cationically-charged species results in more uniform washing of the pulp and hence more efficient use of the defoamer components during such washing.

### GENERAL DESCRIPTION OF INVENTION

The water-soluble cationically-charged species employed in the improved defoamer composition of the invention may be selected from a variety of such materials which are capable of forming a solid product by ionic interaction with lignin in the pulp. The water-soluble cationically-charged species may comprise a cationic polymeric material, a cationic surfactant or mixture of such species. Preferably, a cationic water-soluble polymer possesses a high charge density so as to form the solid product readily and a lower molecular weight, so as to be readily water-soluble while not significantly altering the wash water properties.

Examples of such cationic water-soluble polymers may include high molecular weight, cationic polyacrylamide with low charge density, low molecular weight, highly charged cationic polyacrylamide, cationic starches with low charge density poly(ethleneimines), which may be quaternized, and other cationic water-soluble polymers.

Other water-soluble polymeric components, such as water-soluble non-ionic polymers, also may be present in the wash water, if desired, along with the cationically-charged species, such as wash water containing water-soluble cationic polymers and/or cationic surfactants, and water-soluble non-ionic polymers.

The quantity of the cationically-charged species required to achieve an improvement in washing efficiency is quite small and, to some extent, is determined by the concentration of lignin in the pulp mat and the charge on the species. The quantity of such cationically-charged species required to effect such improvement may vary widely, for example, from about 0.1 up to about 20 wt% of the defoamer composition.

The defoamer composition of the invention further comprises other defoaming components conventionally found in defoamer compositions, for example, a suspension of finely-divided hydrophobic lubricating particles in a suitable carrier liquid, as described in the above-mentioned Canadian Patent 1,069,742. The carrier liquid also acts as the carrier liquid for the cationically-charged species and may be any convenient hydrocarbon oil.

The liquid hydrocarbon oil may be any inert liquid aliphatic, alicyclic or aromatic hydrocarbon or mixture thereof. The hydrocarbon should be liquid at room temperature and atmospheric pressure, have a viscosity of from about 30 to about 400 SUS at 37,8°C (100°F) and an average of from about 6 to about 25 carbon atoms.

The finely-divided hydrophobic lubricating particles may include hydrophobic silica particles, hydrophobic oil-insoluble wax particles, or mixtures of the two. Such hydrophobic silica particles usually are precipitated silica particles which have the surface rendered hydrophobic by the use of an oil or other hydrophobic material, such as, a suitable silicone.

The hydrophobic oil-insoluble wax particles usually are waxy fatty acid amide particles, generally those formed by reaction of a polyamine containing at least one alkylene group having from 2 to 6 carbon atoms and a fatty acid having from five to twenty-two carbon atoms excluding the carboxyl group carbon.

Among the fatty acids which may be used are hexanoic, decanoic, lauric, palmitic, oleic, stearic, ricinoleic, naphthenic acids obtained as by-products from the refining of petroleum, tall oil acids and tallow fatty acids.

Polyamines which may be used include ethylene diamine, butylene diamine, diethylene triamine, triethylene tetramine, hexamethylene diamine, decamethylene diamine, hydroxyethyl ethylene diamine and 1:3-diamino-2-propanol.

Examples of suitable hydrophobic amides are methylene bis acrylamide, methylene bis pelargonamide, ethylene bis capramide, methylene bis lauramide, methylene bis myristamide, methylene bis palmitamide, methylene bis stearamide, ethylene-bis-stearamide, ethylene bis arachidamide and ethylene bis behenamide.

It is preferred to use mixtures of hydrophobic silica particles and hydrophobic amide particles as the finely-divided hydrophobic lubricating particles. The weight ratio of the components of such mixtures may vary widely, such as, from about 1:9 to about 9:1, typically about 1:1.

The particle size of the finely-divided particles in the composition may vary widely and is colloidal in magnitude. The particle size is generally less than about 20 microns, preferably less than about 10 microns. There is usually a range of particle sizes in the composition.

The proportions of the components of the composition may vary widely although the content of finely-divided hydrophobic particulate material generally does not exceed about 25% by weight of the composition, and quantities as low as about 1% by weight may be used. Preferably, the hydrophobic particles constitute about 5 to about 15% by weight of the composition.

The composition may optionally contain minor quantities of other components. One such additional component is a spreading agent which may be one or more anionic, cationic or non-ionic surfactant.

Examples of suitable anionic surfactants are fatty acids containing from about 12 to about 22 carbon atoms, soaps of the fatty acids, alkali metal salts of alkyl-aryl sulfonic acids, sulfated or sulfonated oils and alkali metal salts of short chain petroleum sulfonic acids.

Examples of suitable cationic surfactants are salts of long chain primary, secondary or tertiary amines and quaternary salts.

Examples of suitable non-ionic surfactants are alkoxylated higher fatty alcohols, alkoxylated alkyl phenols, alkoxylated fatty acid amides, polyethylene glycol esters of long chain fatty acids, sorbitans, Spans and Tweens.

The spreading agent assists in the spreading of the carrier in the aqueous slurry and hence in the distribution and penetration of the lubricating particles into the slurry.

The quantity of spreading agent used may vary widely, and is generally less than about 7% by weight of the composition, preferably in the range of about 1 to about 2% by weight of the composition.

Another minor component which may be included in the composition is a silicone oil, which may be a polysiloxane, for example, a dimethyl polysiloxane. When present, small quantities of silicone oil of from about 0.1 to about 2% by weight are used, preferably about 0.1 to about 1% by weight.

Another minor component which may be present is a colloidal or fumed silica which acts as a thickening agent for the composition. Such silica may be present in quantities up to about 5% by weight, preferably about 0.05 to about 0.5% by weight.

An alcohol also may be included in the composition to act as a stabilizer. The alcohols which may be used include short chain aliphatic alcohols, for example, isopropyl alcohol. Quantities of such alcohol may vary from about 0.3 up to about 2% by weight and preferably are in the range of about 0.5 to about 1% by weight.

One further minor component which may be present in the composition is a fatty acid ester which functions as a dispersing agent and viscosity cutter. This component may be any fatty acid ester of a long chain fatty acid, such as, a fatty acid having about 5 to about 22 carbon atoms in the chain, and a lower alcohol, such as one having from 1 to 6 carbon atoms. The fatty acid ester may be present in the composition in an amount of about 0.4 to about 2% by weight of the composition, preferably about 0.5 to about 1% by weight.

As mentioned above, the quantity of cationically-charged species also may vary widely and may comprise from about 0.1 to about 20 wt% of the defoamer composition.

In addition to such oil-based defoamer compositions, the defoamer composition incorporating the cationically-charged species may be aqueous based, as described in the aforementioned Canadian Serial No. 2,048,823. In such compositions, components essential to the composition are hydrophobic silica, silicone oil, liquid hydrocarbon oil, water and emulsifiers. Optional components comprise ethylene bis-stearamide and non-ionic surfactants, along with the cationically-charged species.

Such essential components may be present in the following proportions:

| | General Range | Preferred Range |
|---|---|---|
| Hydrophobic silica | about 1 to about 10 wt% | about 2 to about 5 wt% |
| Silicone oil | about 10 to about 30 wt% | about 15 to about 25 wt% |
| Water | about 20 to about 45 wt% | about 30 to about 40 wt% |
| Process oil | about 20 to about 45 wt% | about 25 to about 40 wt% |
| Emulsifiers | about 0.5 to about 3 wt% | about 1 to about 2 wt% |

The hydrophobic silica acts as a defoamer component of the composition. When present, generally in an amount of about 1 to about 5 wt%, ethylene-bis-stearamide also acts as a defoamer component.

The silicone oil may be a polysiloxane, for example, dimethyl polysiloxane. The liquid hydrocarbon oil may be any inert liquid aliphatic, alicyclic or aromatic hydrocarbon or mixture thereof. The liquid hydrocarbon oil generally has a viscosity of about 30 to about 400 SUS at 37,8°C (100°F) and an average of about 6 to about 25 carbon atoms. One suitable hydrocarbon oil is hydrocarbon process oil.

The emulsifier may comprise one of a wide variety of surfactants.

When present, non-ionic surfactants, generally in an amount of about 1 to about 5 wt% may be any of a wide class of synthetic surfactants, such as ethoxylated and/or propoxylated long chain alcohols.

The components of the defoamer composition employed herein are admixed together to form a homogenous composition, which is added to the pulp, usually kraft pulp, so as to be present at least during the early stages of washing. The composition is added in amounts sufficient to efficiently treat the pulp. The quantity employed depends on the nature of the pulp to be treated and the components present. Generally, the amount of defoamer composition employed may vary up to about 9 kg (20 pounds) per ton of pulp, typically about 0,45 to 0,9 kg (1 to 2 pounds) per ton of pulp.

The defoamer composition of the invention exhibits improved washing properties as a result of the presence of the cationically-charged species, in providing a more uniform washing of the pulp, which in turn, enables a more efficient use of the defoamer component to be achieved. A lesser quantity of defoamer composition may be employed for the same level of final solids content of the pulp.

### EXAMPLE

A defoamer composition (Defoamer 540 PE) was prepared, comprising hydrophobic silica, hydrocarbon oil and a polyamide.

This defoamer was used on the brown stock washers in a commercial pulp mill for a four month trial.

Tests carried out from time to time during the trial period indicated that efficient defoaming was achieved with a 15% increase in drainage of aqueous material from the pulp, corresponding to an increase of 1.5% of the solids content of the pulp obtained, at an applied quantity of about 40% less than conventionally applied for a conventional defoaming composition, from which the cationically-charged species (i.e. the polyamide) was absent.

These results show the significant improvement in washing efficiency achieved by the presence of the cationically-charged species in the defoaming composition.

### SUMMARY OF DISCLOSURE

In summary of this disclosure, the present invention provides a novel defoamer composition with improved washing properties which includes a water-soluble cationically-charged species along with other defoaming components. Modifications are possible within the scope of this invention.

## Claims

1. A defoamer composition for use in the washing of wood pulp, characterized by the improvement which comprises at least one water-soluble cationically-charged species capable of forming a solid product by ionic interaction with lignin in the wood pulp during said washing step as a component of said composition.

2. The composition of claim 1 wherein said water-soluble cationically-charged species is at least one water-soluble cationic polymer and/or water-soluble cationic surfactant.

3. The composition of claim 2 wherein said water-soluble cationic polymer possesses a high charge density.

4. The composition of claim 1 wherein said water-soluble cationically-charged species is a polyacrylamide or polyamine.

5. The composition of claim 1 wherein said water-soluble cationically-charged species is present in said defoamer composition in an amount of from about 0.1 to about 20 wt%.

6. The composition of any one of claims 1, 2, 3, 4 or 5 which is oil-based and contains a suspension of finely-divided hydrophobic lubricating particles and a liquid carrier for said particles and said cationically-charged species.

7. The composition of any one of claims 1, 2, 3, 4 or 5 which is water-based and contains hydrophobic silica, silicone oil, liquid hydrocarbon oil, water and emulsifiers along with the cationically-charged species.

## Patentansprüche

1. Entschäumerzusammensetzung zum Einsatz in der Waschlösung einer Holzpulpe, dadurch gekennzeichnet, daß die Verbesserung darin liegt, daß beim Waschschritt - als Komponente der Zusammensetzung - mindestens ein wasserlöslicher, kationisch geladener Stoff vorliegt, der mit dem Lignin in der Holzpulpe durch ionische Wechselwirkung ein festes Produkt bilden kann.

2. Zusammensetzung nach Anspruch 1, wobei der wasserlösliche, kationisch geladene Stoff wenigstens ein wasserlösliches kationisches Polymer und/oder ein wasserlösliches kationisches Oberflächenmittel ist.

3. Zusammensetzung nach Anspruch 2, wobei das wasserlösliche kationische Polymer eine hohe Ladungsdichte hat.

4. Zusammensetzung nach Anspruch 1, wobei der wasserlösliche, kationisch geladene Stoff ein Polyacrylamid oder ein Polyamin ist.

5. Zusammensetzung nach Anspruch 1, wobei der wasserlösliche, kationisch geladene Stoff in der Entschäumerzusammensetzung in einer Menge von ca. 0,1 bis ca. 20 Gew.% vorliegt.

6. Zusammensetzung nach den Ansprüchen 1, 2, 3, 4 oder 5, die eine Ölbasis hat und eine Suspension enthält von feinverteilten hydrophoben Gleitpartikeln und einem flüssigen Träger für die Partikel sowie dem kationisch geladenen Stoff.

7. Zusammensetzung nach den Ansprüchen 1, 2, 3, 4 oder 5, die eine Wasserbasis hat und neben dem kationisch geladenem Stoff hydrophobes Siliciumdioxid, Siliconöl, flüssiges Kohlenwasserstofföl, Wasser und Emulgatoren enthält.

## Revendications

1. Composition antimousse destinée à être utilisée dans le lavage de la pâte de bois, caractérisée par l'amélioration qui comprend l'incorporation, en tant que constituant de ladite composition, d'au moins une espèce cationique, soluble dans l'eau, capable de former un produit solide par interaction ionique avec la lignine de la pâte de bois, durant ladite étape de lavage.

2. Composition selon la revendication 1, dans laquelle ladite espèce cationique, soluble dans l'eau, est au moins un polymère cationique soluble dans l'eau et/ou un tensio-actif cationique soluble dans l'eau.

3. Composition selon la revendication 2, dans laquelle ledit polymère cationique soluble dans l'eau possède une densité élevée de charges.

4. Composition selon la revendication 1, dans laquelle ladite espèce cationique, soluble dans l'eau, est un polyacrylamide ou une polyamine.

5. Composition selon la revendication 1, dans laquelle ladite espèce cationique, soluble dans l'eau, est présente en une proportion d'environ 0,1 à environ 20% en poids.

6. Composition selon l'une quelconque des revendications 1 à 5, qui est à base d'huile et qui contient une suspension de particules lubrifiantes hydrophobes, finement divisées, et un véhicule liquide pour lesdites particules et ladite espèce cationique.

7. Composition selon l'une quelconque des revendications 1 à 5, qui est à base d'eau et qui contient, en même temps que l'espèce cationique, de la silice hydrophobe, une huile de silicone, une huile hydrocarbonée liquide, de l'eau et des émulsifiants.
